# EUROPEAN PATENT APPLICATION

(11) **EP 2 262 232 A1**
(43) Date of publication of application: **15.12.2010**
(21) Application number: 09290423.4
(22) Date of filing: 10.06.2009
(51) Int. Cl.: H04N 5/445, G06F 3/01

(54) **Smart viewport selection inside an electronic programming guide**

(71) Applicant: Alcatel Lucent, 75008 Paris (FR)
(72) Inventor: Handekyn, Koen, 9080 Lochristi (BE); Bruynooghe, Bert, 9050 Gentbrugge (BE)
(74) Representative: Vandenbroeck, Josiane Anne Marie

(57) **Abstract**

A state machine for managing the navigation between cells of an Electronic Program Guide EPG of a multimedia device. The EPG comprises a grid of cells (C11 ... C14, C21 ... C23, C31 ... C34) arranged in rows (R1, R2, R3). The grid of cells can move horizontally and only a portion thereof is visible within a viewport window (VP). The state machine comprises an input handler module (IH) for detecting the navigation (HS1, VS1, VS2) from a first cell (C13) to a second cell (C34) of the grid and for consequently triggering (S1) a clock timer module (CT). After a predetermined time delay of, e.g., 1000 ms, the clock timer module activates a scroll-into-viewport module (SIV) which moves horizontally (SH) the grid of cells for bringing the second cell fully visible into the viewport window (VP). Owing to this time delay, the navigation between cells is much more intuitive and provides a calmer user interface. In a preferred embodiment, the time delay is shorter, and even immediate, for a horizontal navigation (HS1) than for a vertical navigation (VS1 or VS2).

## Description

The present invention relates to a state machine for managing an Electronic Program Guide EPG comprising a grid of cells arranged in a plurality of rows, each cell representing a multimedia program and each row comprising a series of cells representing consecutive programs of a same multimedia channel, said grid of cells being adapted to move horizontally and having a portion visible within a viewport window, said state machine comprising an input handler module adapted to detect navigation from a first cell to a second cell of said grid.

Known Electronic Program Guides EPG, e.g. for IPTV devices, show 'grid' implementations that provide a user with non-intuitive navigation mechanisms within the grid of cells. In many applications, the user needs to explicitly shift the row to the right or to the left in order to see the selected cell on the viewport window. In other applications, the state machine managing the EPG triggers a viewport window readjustment immediately after each navigation between cells, resulting in scrolling left and right more often than needed.

An object of the present invention is to provide a state machine for managing an Electronic Program Guide EPG of the above known type but wherein the navigation between cells is more intuitive.

According to the invention, this object is achieved due to the fact that said state machine further comprises a clock timer module coupled to said input handler module and a scroll into viewport module controlled by said clock timer module, said input handler module being adapted to trigger said clock timer module upon detection of said navigation, and said scroll into viewport module being adapted to be activated by said clock timer module a predetermined time delay after said clock timer module is triggered, and to then move horizontally said grid of cells so that said second cell becomes fully visible in said viewport window.

In this way, instead of readjusting immediately - or manually - the viewport window to make the second cell fully positioned, i.e. visible, therein, the readjustment occurs only after a time delay.

As a result, when the user is navigating or scrolling towards a cell that would normally require or trigger a viewport window adjustment, this is not happening until the user is holding his position on that cell for a predetermined time.

This "grid navigation" implementation is no longer stateless, but time aware. The viewport window is only adjusted when the user's intent is that he/she wants to stay on that second cell. The invention can be described as 'intent' capturing and the navigation between cells is thereby more intuitive.

Another characterizing embodiment of the present invention is that the predetermined time delay after which said scroll into viewport module is activated by said clock timer module is different when horizontal navigation is detected by said input handler module and when vertical navigation is detected by said input handler module.

This allows adapting to possible different filings of the user according to the direction of navigation prior to adjust the viewport window to bring the second cell totally inside the latter.

In a preferred characterizing embodiment of the present invention, the predetermined time delay after which said scroll into viewport module is activated by said clock timer module is shorter when a horizontal navigation is detected than when a vertical navigation is detected.

Specifically vertical navigation is non intuitive for most of the current implementations. This is mainly a consequence of the fact that the EPG grid has no clear columns and that the known navigation implementations are stateless. Due to this structure of the grid the way up may be different than the way down (not symmetrical), which is not intuitive.

By providing a timer or time delay of, e.g., 1000 ms for a vertical navigation, the viewport window is only adjusted when the user holds the position for a certain time. In the other case, when the user is merely passing by a cell, the viewport window needn't be adjusted witch yields a much more intuitive and calmer user interface.

On the other hand, in case of horizontal navigation, the viewport window may be adjusted immediately or nearly.

Further characterizing embodiments of the present state machine for managing an Electronic Program Guide EPG are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a state machine for managing an Electronic Program Guide EPG according to the invention; and
Figs. 2 to 4 show successive navigation steps within a grid of cells visible in a viewport VP of the Electronic Program Guide EPG.

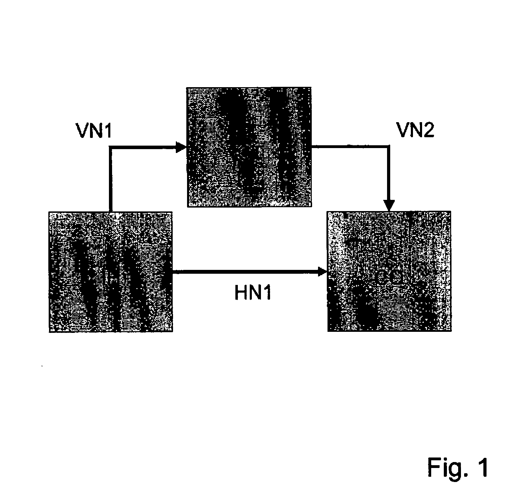

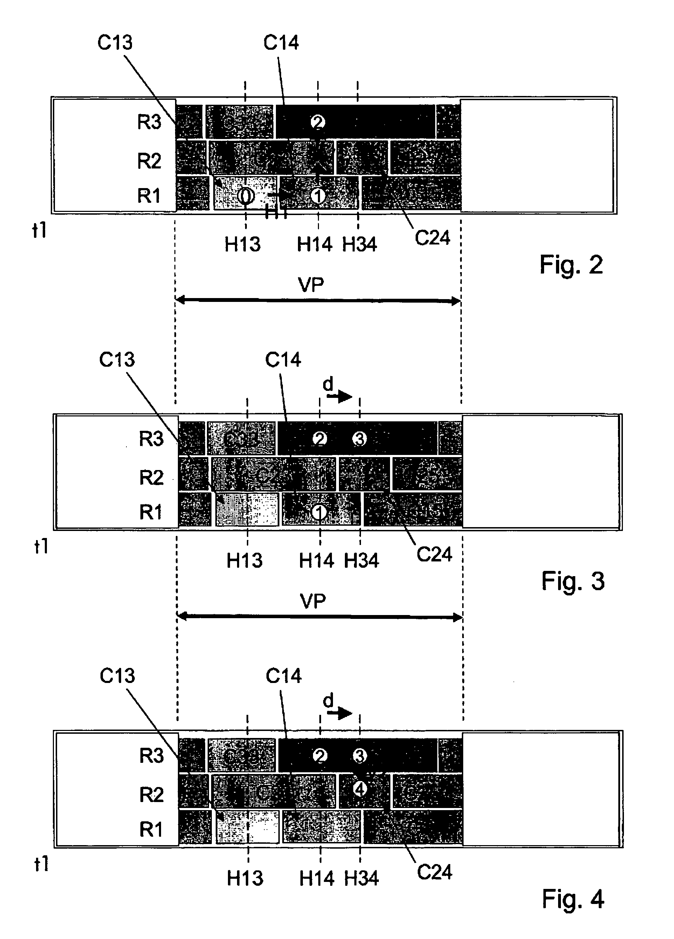

The state machine shown at Fig. 1 is used for managing the navigation between cells of an Electronic Program Guide EPG of a multimedia device, e.g. an IPTV. The EPG comprises a grid of cells C11 ... C14, C21 ... C23, C31 ... C34 arranged in different rows R1, R2, R3 as shown at the Figs. 2 to 4. Each cell represents a multimedia program broadcasted by the multimedia device and each row comprises a series of cells representing consecutive programs of a same multimedia channel. The grid of cells can move horizontally and only a portion thereof is visible within a viewport window VP, e.g. displayed by the multimedia device.

The state machine of Fig. 1 comprises an input handler module IH for detecting the navigation from an initial cell, say C13 at Fig. 2, to a destination cell, say C34 at Fig. 4, of the grid. The navigation is for instance initiated by a user of the multimedia device.

At the start of a navigating through the Electronic Program Guide EPG, i.e. at a time moment t1 as shown at Fig. 2, a horizontal navigation to the right HS1 and starting from the initial cell C13 is for instance detected by the input handler module IH.

Upon detection of this horizontal navigation HS1, the input handler module IH triggers S1 a clock timer module CT also belonging to the state machine. This horizontal navigation ends in the cell C14 in the same row R1 and immediately at the right of the cell C13.

In the present example, further vertical navigation steps VS1 and VS2 are detected by the input handler module IH at a time moment t2 as shown at Fig. 3. These vertical navigation steps VS1 and VS2 respectively move the selection from the cell C14 in row R1 to the cell C23 in row R2 and to the cell C34 in row R3; the cells C14, C23 and C34 being located on a same vertical line in the grid of cell.

At each navigation detection, the input handler module IH restarts the triggering S1 of the clock timer module CT.

After a time delay of, e.g., 1000 ms fixed the clock timer module CT, the latter CT activates and controls S2 a Scroll-into-Viewport module SIV also belonging to the state machine. This occurs at a time moment t3 as shown at Fig. 4.

The scroll into viewport module SIV is adapted to shift SH the grid of cells in order to bring the last selected cell C34 fully visible in the viewport window VP, if needed. This repositioned of the cell inside the viewport window by a horizontal displacement of the grid of cells is called viewport window adjustment.

As a result, when a user is navigating in the Electronic Program Guide EPG and is passing on a cell that would normally need a viewport window adjustment because it is not fully visible inside this viewport window, this adjustment is not happening until the user is holding the navigation on that cell for at least a fixed time, e.g. 1000 ms.

In the other case, the user is merely passing by and the viewport window do not need to be adjusted, which yields a much more intuitive and calmer user interface.

In a preferred embodiment, the time delay after which the clock timer module CT activates the scroll into viewport module SIV is shorter when a horizontal navigation HS1 is detected than when a vertical navigation VS1 or VS2 is detected. In case of a horizontal navigation HS1, the scroll into viewport module SIV may even be immediately activated by the clock timer module CT, i.e. without time delay.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A state machine for managing an Electronic Program Guide EPG comprising a grid of cells (C11 ... C14, C21 ... C23, C31 ... C34) arranged in a plurality of rows (R1, R2, R3), each cell representing a multimedia program and each row comprising a series of cells representing consecutive programs of a same multimedia channel, said grid of cells being adapted to move horizontally and having a portion visible within a viewport window (VP),
said state machine comprising an input handler module (IH) adapted to detect navigation (HS1, VS1, VS2) from a first cell (C13) to a second cell (C34) in said grid,
***characterized in that*** said state machine further comprises a clock timer module (CT) coupled to said input handler module (IH) and a scroll into viewport module (SIV) controlled by said clock timer module,
said input handler module being adapted to trigger (S1) said clock timer module upon detection of said navigation (HS1, VS1, VS2),
and said scroll into viewport module being adapted to be activated (S2) by said clock timer module a predetermined time delay after said clock timer module is triggered, and to then move horizontally (SH) said grid of cells so that said second cell becomes fully visible into said viewport window (VP).

2. The state machine according to claim 1, ***characterized in that*** the predetermined time delay after which said scroll into viewport module (SIV) is activated by said clock timer module (CT) is different when horizontal navigation (HS1) is detected by said input handler module (IH) and when vertical navigation (VS1, VS2) is detected by said input handler module.

3. The state machine according to claim 2, ***characterized in that*** the predetermined time delay after which said scroll into viewport module (SIV) is activated by said clock timer module (CT) is shorter when a horizontal navigation (HS1) is detected than when a vertical navigation (VS1, VS2) is detected.

4. The state machine according to claim 3, ***characterized in that*** said scroll into viewport module (SIV) is immediately activated by said clock timer module (CT) in case of horizontal navigation (HS1).

5. The state machine according to claim 2,
***characterized in that*** that said horizontal navigation (HS1) consists of jumping from one cell to another cell within a same row (R1, R2, R3) of cells,
*and **in that*** said vertical navigation (VS1, VS2) consists of jumping from one cell on one row to another cell on another row of said grid.

6. The state machine according to claim 1, ***characterized in that*** said navigation is initiated by a user of said Electronic Program Guide EPG.
